Europäisches Patentamt

(19) European Patent Office

Office européen des brevets

(11) Publication number: **0 447 223 A1**

(12) **EUROPEAN PATENT APPLICATION**

(21) Application number: 91302150.7

(22) Date of filing: 14.03.91

(51) Int. Cl.⁵: **B29C 67/14, B32B 31/12**

(30) Priority: 15.03.90 JP 64819/90

(43) Date of publication of application:
18.09.91 Bulletin 91/38

(84) Designated Contracting States:
DE FR GB IT

(71) Applicant: MITSUBISHI PETROCHEMICAL
COMPANY LIMITED
5-2, Marunouchi 2-Chome
Chiyoda-Ku Tokyo-To (JP)
Applicant: NIPPON STEEL CORPORATION
6-3 Ohtemachi 2-chome
Chiyoda-ku Tokyo-to (JP)

(72) Inventor: Ohno, Kenyu, c/o Mitsubishi
Petrochem. Comp. Ltd.
Yokkaichi Sogo Kenkyusho, Toho-Cho
Yokkaichi-Shi, Mie-Ken (JP)
Inventor: Uchino, Hiroyuki, c/o Nippon Steel
Corporation
Daiichi Gijutsu Kenkyusho, 1618, Ida,
Nakahara-Ku
Kawasaki-Shi, Kanagawa-Ken (JP)

(74) Representative: Lewin, John Harvey et al
ELKINGTON AND FIFE Beacon House 113
Kingsway
London WC2B 6PP (GB)

(54) **Process for manufacturing fiber-reinforced thermoplastic resin articles.**

(57) The problem of a poor surface of molded articles of fiber-reinforced thermoplastic resin due to the fiber reinforcement used which has come up to the surface of the molded articles has been solved by the use of netting of openings of no larger than 3 mm during the molding process so that the netting is embedded on the surface of the molded article.

# PROCESS FOR MANUFACTURING FIBER-REINFORCED THERMOPLASTIC RESIN ARTICLES

## BACKGROUND OF THE INVENTION

### Field of the Invention

The present invention relates to process for manufacturing molded articles of fiber-reinforced thermoplastic resin having improved appearance as well as improved stiffness at an elevated temperature and impact strength at a low temperature.

More particularly, the present invention relates to the improvement in manufacturing molded articles made of a composite material comprising thermoplastic resin and fiber reinforcement, which improvement is directed to the use of netting placed near the surface of the composite material in the mold thereby to improve the surface of the article which could be deteriorated by the fiber reinforcement added, in addition to the improvement in stiffness at elevated temperatures and also in impact strength at low temperatures whereby the articles are useful in the automotive industries, electric industries, electronic industries, and the like.

### Related Art

Articles made of fiber-reinforced thermoplastic resin have heretofore been manufactured from porous or solid composite sheet materials or preforms by forming under heat and pressure by, in particular, pressing, stamping, or flow-molding of the preform, which composite sheet materials or preforms are, in turn, manufactured by a process wherein a thermoplastic resin is distributed over a mat of fiber-reinforcement with some repetition if desired and pressure and/or heat is applied thereon, where a mat of fiber-reinforcement is impregnated with an aqueous dispersion of powder of a thermoplastic resin, or where a mass of fiber for reinforcement and a mass of powder of thermoplastic resin are admixed in a dry or wet state, which will then be fabricated into a mat upon drying.

The composite sheet materials formed by these methods or preforms are recently called "thermoplastic stampable sheets", and have been widely used as structure materials for automobiles and as materials in constructions, in which the easy formability and resistance to chemicals of the matrix thermoplastic resin and improved stiffness, impact resistance and dimensional stability due to the fiber-reinforcement used are duly enjoyed.

Most of the thermoplastic stampable sheets may have drawbacks such that a portion of the fiber for reinforcement used may come up to the surface of the article formed therefrom by stamping or flow-molding and a certain marking different in color hue along the fiber of reinforcement, which is called a freeze mark, appears on the surface of the articles formed whereby the articles have poor appearance resulting, in turn, in poor merchandise value or the articles are used mainly for the hidden parts due to their poor surface smoothness.

Some improvements have heretofore been made for preventing the fiber of reinforcement from coming up to the surface of articles formed such that a sheet or film of a resin is laid over the surface of the preform of articles formed from fiber-reinforced thermoplastic resins during the molding step. However, the improvement may not be applied to articles of a complex shape since some fiber of reinforcement can still come up to the surface due to the flowing of the resin at the molding step. In particular, flow molding may entail problems such that, since in most case of flow molding a plurality of pre-heated blanks, depending on the design used in the article in question, is fed to the mold whereby the fiber of reinforcement can easily come up to the surface at the junction of the blanks.

Freeze marks may be less evident when the content of fiber reinforcement is so low as, e.g. 10 to 20% by weight or the surface of the fiber of reinforcement is treated previously by a suitable coupling agent, but articles having less freeze marks are still unsatisfactory for the use where appearance of the articles is important.

The flow molding may frequently entail the problem of the freeze mark since the flow molding is such that a resin moves within a mold which is held at a temperature far lower than the melting point of the resin used.

## SUMMARY OF THE INVENTION

We have found that the fiber reinforcement can be prevented from coming up to the surface of articles when the articles are molded under heat and pressure with netting placed over the surface.

Accordingly, the present invention presents the improvement in a process for manufacturing molded articles of a fiber-reinforced thermoplastic resin wherein a sheet preform made of a composite material comprising fiber reinforcement and a thermoplastic resin is molded under heat and pressure into a molded article of a fiber-reinforced thermoplastic resin, the improvement comprising subjecting the preform to the molding process in the presence, near its surface and covering at least a part of its surface, a sheet of netting of openings of no larger than 3 mm, thereby to form an molded article having the netting embedded on its surface.

The molded articles of fiber-reinforced thermoplastic resins according to the present invention which are manufactured by a molding method wherein a sheet of netting, or a net, of an opening of 3 mm or smaller is placed over at least a part of a preform of the composite material in the mold and the molding is conducted under heat and pressure have a very smooth surface in that no projection over the surface of the fiber-reinforcement is found, and the articles can thus easily receive surface processing thereon such as painting, printing or metal plating, whereby the articles can be used also as the materials for making outer surfaces of various articles. The articles in accordance with the present invention are those reinforced by fiber reinforcement and are thus endowed with improved stiffness, impact resistance, dimensional stability and resistance to heat, whereby the articles are thus useful in industrial applications.

## BRIEF DESCRIPTION OF THE DRAWINGS

In the accompanying drawings:

FIG. 1 shows a perspective view of a molded article of fiber-reinforced thermoplastic resin manufactured by flow molding whereby capability of the composite preform sheet in accordance with the present invention for the flow molding is to be evaluated; and

FIG. 2 shows a perspective view of a similar molded article produced by stamping for evaluation of the capability for the stamping.

## DETAILED DESCRIPTION OF THE PREFERRED EMBODIMENTS

I. Composite material/Preform

(1) Ingredients

(a) Thermoplastic resins

Any thermoplastic resins can be used in the present invention.

Examples of the thermoplastic resins for use in the present invention include polyolefin resins such as polyethylene and polypropylene, polyvinyl chloride resins, polystyrene resins, ABS resins, polyamide resins, polyoxymethylene resins, acrylic resins, polyester resins, polycarbonate resins, polyhexylene ether resins, polyethersulfone resins, polysulfone resins, polyetherimide resins, polyether-etherketone, and modification products and blends of these resins. Among these resins, crystalline resins are preferable since the resistance to heat exemplified by, e.g. thermal distortion temperature of such crystalline resins is remarkably improved by a fiber reinforcement used.

Examples of crystalline resins include polyethylene, polypropylene, polyamides and polyesters, polypropylene and polyamides being preferred.

The thermoplastic resins can be in any form such as pellets, powder, flakes, fiber, film or sheets, and a suitable form is selected depending on the method of preparing the sheet preforms of the composite materials, which will be described in more detail hereinbelow or depending in particular on the way of preparing preforms of the composite materials by a method of laying impregnation or dispersion.

A preferred method of preparing the composite materials is what is called "dispersion method" which will be described hereinbelow, and the form of the thermoplastic resins is thus preferably powder of a particle of 1 mm or smaller.

The thermoplastic resins for use in the present invention can contain any conventional additives such as a filler, a colorant, a blowing agent, a crosslinking agent and the like depending on the objects intended.

(b) Fiber reinforcement

Examples of fiber reinforcement for use in the present invention include natural fiber materials such as pulp and wood flour, inorganic fiber materials such as glass fiber, carbon fiber, and metal fiber, synthetic fiber such as plastics fiber and aramid fiber, and mixtures of these. Preferably used is glass fiber.

A preferable form of the fiber reinforcement may be a mass of discrete fiber of a length of 3 to 50 mm and a diameter of 3 to 25 $\mu$m, which will be suitable in the light of the preferred method of preparing a preform of the composite material which is a dispersion method.

The fiber reinforcement can alternatively be in any other forms depending on the object intended such as monofilament, strand or in woven state or in any combinations of these. It may be conventional to treat the fiber reinforcement with a coupling agent or to impregnate a mass of fiber reinforcement with a modifier.

(2) Preparation of preforms of the composite materials

The composite materials for use in the present invention are prepared from the thermoplastic resins and the fiber reinforcement given above in a suitable shape as a preform which may be a sheet.

Any suitable method may be used for preparing the composite materials including laying, impregnation or dispersion. A method based on dispersion of materials in a dry state or a wet state is preferable, a method based on dispersion in a wet state being more preferable.

The method based on the dry dispersion of materials may be such that a mass of fiber reinforcement such as glass fiber, preferably chopped strand of glass fiber previously opened, is put in a mixer such as a two-axis ribbon blender, powder of a thermoplastic resin is added and the mixture is then subjected to agitation to form a well-dispersed mixture, or chopped strand of glass fiber and powder of a thermoplastic resin are put simultaneously in a mixer whereby the opening of the chopped strand of glass fiber and agitation of the mixture take place at the same time. The well-dispersed mixtures thus obtained are then formed into a mat, which will then be heated under pressure thereby to melt the thermoplastic resin in the mixture to form a sheet of a basis weight of 500 to 5000 $g/m^2$.

The method based on the wet dispersion may be such that a mixture of powder of 50 to 90% by weight of a thermoplastic resin, the particle size being 1 mm or smaller, and 50 to 10% by weight of fiber reinforcement comprising chopped strand of glass fiber of a length of 3 to 50 mm and a diameter of 3 to 25 μm is added to water to which a surfactant has been added and foamed with ample agitation, and the mixture is further agitated thereby to open the chopped strand and to disperse the resin and the glass fiber in the water. The foamed slurry is subjected to filtration to remove the foam and is then subjected to sheeting step to form a web which is then dried. The dried web is further heated to melt the resin to form a sheet of a basis weight of 500 to 5000 $g/m^2$.

It is not required that the preform of the composite material be restricted to those where the thermoplastic resin has been completely melted into a coherent state, and sheets in which the thermoplastic resin has not been melted at all or completely where the sheets still remain porous, or typically "mat", are included in the "preform of the composite material" in the present invention. The preform may be a sheet.

II. Production of molded articles of the fiber-reinforced thermoplastic resins

(1) Netting

In accordance with the present invention, sheets of netting, or synongmously nets, are used during the process of molding into articles of the composite materials comprising the resin and the fiber reinforcement thereby to prevent formation of rough surfaces on the molded articles, which rough surfaces are formed when no netting is used. A sheet of netting which has openings of 3 mm or smaller, preferably 0.1 to 1 mm, is used, and is,in one embodiment, placed over the preform of the composite materials in the mold. Preferably, the netting has a thickness of 40 to 600 μm.

Examples of the netting include netting such that natural fibers such as cotton or flax, inorganic fibers such as glass fiber, ceramics fiber, carbon fiber or metal fiber, or plastic or synthetic fibers such as aramid fiber are processed to form netting. The term "netting" or "net" in the present invention includes sheets such as metal sheets or plastics sheets which have been punched into a form of netting.

It is required that the netting be resistant to melting or undue deformation under heat which may be encountered during the molding process and be of an opening so that the molten resin during the molding process can move through the opening and the coming up of the fiber reinforcement over the surface of the molded articles is effectively prevented.

It is preferable that the netting be deformed to some extent or shrink or expanded depending on the form of the molded articles, and knitted structures are thus preferred. The netting made of a lace structure of fiber may be preferable when some aesthetic appearance of articles is desired.

(2) Laying of netting

The laying of netting over a surface of preforms during molding process thereby to embed the netting on the surface of the molded articles formed may be conducted by any suitable methods including, for example, the following.

When a preform of the composite material is used as it is on market without any forming or molding processing or subjected to simple processing such as bending, or when a preform will receive deformation only to a low degree as is encountered during the stamping molding or flow molding, the netting may preferably be laid on the preform during the course of preparing the preform wherein heat and/or pressure may preferably applied so as to embed the netting in the preform prepared.

When the preform is to be subjected to a molding process for forming a molded article of a rather complicated form, such as e.g. flow molding, whereby previously embedded netting in the preform may be broken or unduly deformed, the netting may be laid on the preform at the time when the preform is subjected to the molding process.

In particular, some special consideration may preferably be paid when the preform is to be subjected to flow molding. Flow molding is often practiced so that a plurality of blanks designed to form the desired molded articles are fed, upon being heated, to the molding process, and blanks to which the netting has previously embedded could form, upon the molding, a coherent mass of the molded article which may contain the freeze mark at the connections of the blanks where the netting is discontinuous. It is thus preferable to lay the netting over several pieces of the blanks thereby eliminate the discontinuity of the netting between the blanks as much as possible.

The netting can be applied to both of the surfaces of the preform, but it is sufficient for the present invention to apply the netting to only one surface of the preform especially when the other surface in a complicated form such as that having ribs or bosses into which the molten resin would not flow by the netting as a barrier.

Preforms whose thermoplastic resin has not been molten to bind the fiber reinforcement prepared just by the wet or dry dispersion method, namely what is called "mat", may suffer from severe freeze mark problem when the mat is subjected as such to molding process, and it is thus preferable to prepare the preform or mat so that the netting is comprised in it whereby such severe freeze mark problem is remarkably overcome.

(3) Preparation of molded articles

It may be important to use appropriate pressures at the molding process in order to place the netting over the preform of the composite material thereby to embed the netting in the molded articles produced.

The temperatures for the molding may be higher than the melting point of the thermoplastic resin used by 20 to 60°C, preferably 30 to 50°C, , and when the pressure applied is excessively low, the molten resin would not go through the openings of the netting whereby the netting may not be completely embedded within the molded articles formed whereby the articles formed may suffer from poor surface appearance. The pressure used may usually be 0.5 to 400 kg/cm², preferably 1 to 350 kg/cm², but more preferable pressure is at least 3 kg/cm², much more preferable pressure is at least 10 kg/cm² in order to assure complete embedding of the netting.

It is assumed to be unexpected that even such weak netting as medical gauze can prevent fiber reinforcement from coming up to or over the surface of the molded articles if the gauze has appropriate openings in accordance with the present invention whereby a thin layer of the thermoplastic resin is formed over the surface of the molded article produced.

The molded articles formed from the preform can be in any shape including a sheet, which can be processed into articles of more complicated shape. The articles of more complicated shape can, alternatively, be manufactured directly from the preform.

Examples and Comparative Examples are now given hereunder, which are illustrative only.

Comparative Example 1

Pellets colored black of a propylene homopolymer of the Melt Flow Rate under JIS K-7210 of 23 g/10 min were crushed into powder having average particle size of 300 μm.

The powder was added to foamed/bubbled water to which a surfactant had been added and agitated, followed by agitation of further 8 minutes to form an aqueous dispersion of polypropylene powder.

The dispersion was transferred to a box-filter having a screen of 100 mesh opening to form a sheet, and the foam on the sheet was removed under a reduced pressure by a vacuum pump, whereby a web of a moisture content of about 30% by weight was prepared.

The web prepared, after being sprayed with a small amount of a binder, was dried in an oven at 120°C for 2 hours. The dried web was subjected to press-molding by a 70 ton hydraulic press (Arai Seisakusho, Japan) at 210°C under 0.5 kg/cm² for 7 minutes through the use of a spacer of the inside size of 31 cm (width) x 34 cm (length) x 3 mm (thickness), and further pressing was conducted under 10 kg/cm² for 2 minutes. The sheet formed was obtained upon cooling by water passed through the cooling plate.

The sheet had a very smooth surface appearance with good gloss.

A test specimen was cut out of the sheet and subjected to determination of the flexural modulus at 23°C under JIS K-7113, the Izod impact strength at 23°C under JIS K-7110, and the linear expansion coefficient at a temperature of 23 to 100°C under ASTM-D 696.

The flexural modulus was 11,500 kgf/cm², the Izod impact strength was 2.8 kgf·cm/cm, and the linear expansion coefficient was 14 x 10$^{-5}$/°C.

Comparative Example 2

In place of the polypropylene powder, use was made of a mixture of 80% by weight of the polypropylene powder and 20% by weight of chopped strand of glass fiber ECS-13-IP-140G (Trade name by Nippon Denki Glass, Japan), and the procedure set forth in Comparative Example 1 was followed to prepare a sheet of the composite material.

The sheet was found to have some glass fiber having come up to the surface and some freeze mark on the surface.

The sheet, however, was found to have the flexural modulus of 42,000 kgf/cm², the Izod impact strength of 27 kgf·cm/cm and the linear expansion coefficient of 4 x 10$^{-5}$/°C, by which it is shown that the use of glass fiber resulted in considerable improvement in the physical nature of the sheet.

Comparative Example 3

The procedure set forth in Comparative Example 2 was followed except for the use of the chopped strand of glass fiber in an amount of 40% by weight.

The sheet obtained was found to have glass fiber having come up all over the surface and a lot of freeze mark.

The sheet was found to have the flexural modulus of 50,000 kgf/cm², the Izod impact strength of 78 kgf·cm/cm, and the linear expansion coefficient of 2.3 x 10$^{-5}$/°C.

## Example 1

The procedure set forth in Comparative Example 3 was followed except for the use of a sheet of commercially available medical gauze of openings of about 1 mm, which was, after colored black, laid over the web when it was subjected to the molding process.

The sheet obtained was found to have no glass fiber having come up to the surface nor freeze mark and have the gloss of the surface equivalent to that of the sheet in Comparative Example 1 wherein no fiber reinforcement was used.

The surface of the sheet to which no gauze had been applied was found to be poor as in Comparative Example 3.

The sheet was found to have the flexural modulus of 54,000 kgf/cm$^2$, the Izod impact strength of 82 kgf·cm/cm, and the linear expansion coefficient of 1.9 x 10$^{-5}$/°C.

## Example 2

The procedure set forth in Example 1 was followed except for the pressures used in pressing at 210°C for 2 minutes and in cooling under pressure which were each 3 kg/cm$^2$.

The sheet obtained was found to the appearance and the physical nature to be almost the same as those set forth in Example 1.

## Example 3

The procedure set forth in Example 1 was followed except for the use, in place of the gauze, of stainless steel netting of 100 mesh of openings of 0.15 mm.

The sheet obtained was found to have good surface appearance comparable to that of the sheet in Example 1.

The sheet was found to have the flexural modulus of 98,000 kgf/cm$^2$, the linear expansion coefficient of 1.7 x 10$^{-5}$/°C, and the very high Izod impact strength such that it was not broken upon the Izod impact test.

## Comparative Example 4

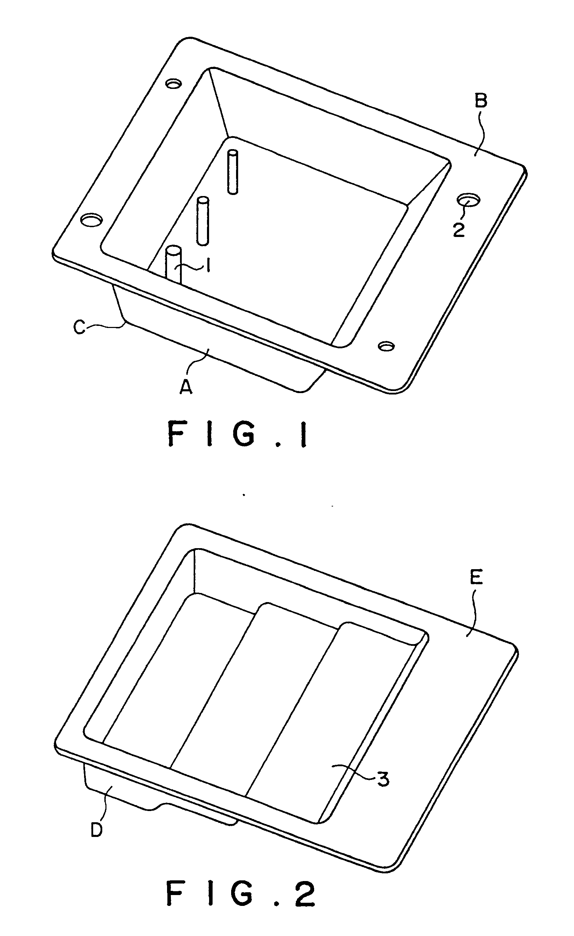

The sheet prepared in Comparative Example 1 was cut into a test sample of 15 cm x 11 cm and, after being preheated for 4 minutes by an infra-red heater of a heater surface temperature of 300°C, the distance between the test sample and the heater being 20 cm, was subjected to molding process wherein the 70 ton hydraulic press referred to hereinabove and a test mold for the flow molding were used thereby to manufacture an molded article shown in FIG. 1 having a surface A which was convex, a surface B which was concave, and a corner portion C which was convex.

The pressure used was 300 kg/cm$^2$, and water at 70°C was fed through the mold.

The molded article thus manufactured had good surface similar to that found in Comparative Example 1.

The molded article manufactured was designed for easy observation of how the fiber reinforcement was filled so that, as shown in FIG. 1, three types of a boss 1 having a height of 20 mm with a diameter of 7.5 and 3 mm each were provided. The molded article was designed also for determining the weld strength so that four types of a hole of a diameter of 10, 8, 6 and 4 mm each were provided.

## Example 4

The procedure set forth in Comparative Example 4 was followed except for the use of the composite sheet prepared in Example 1 which was arranged in the mold so that the surface on which the gauze had been embedded made the surface A.

The molded article thus manufactured had good surface appearance at the flat surface A. The corner C had some glass fiber which had come up due to the breakage of the gauze there and some freeze mark. The surface B of the molded article had poorer appearance than that of the back surface in Example 1.

## Example 5

The procedure set forth in Example 4 was followed except for the uses just ahead of the mold closure of the composite sheet prepared in Comparative Example 3 and of a sheet of medical gauze colored in black over the whole surface to make the surface A.

The molded article thus manufactured had good appearance at the surface A in that the freeze mark was not found even at the corner portion. The surface B was poorer than that of the back surface in Example 1.

## Example 6

The procedure set forth in Comparative Example 4 was followed except for the uses of the composite sheet prepared in Comparative Example 3 and of a sheet of medical gauze colored in black over both the surfaces of the sheet preheated.

The molded article thus manufactured was found to have good surface at both the surfaces A and B so that almost no freeze mark was observed. The tip of the boss on the surface B had some freeze mark, however.

Comparative Example 5

The procedure set forth in Comparative Example 4 was followed except for the use of a composite sheet made of a commercially available polypropylene resin and a mat of glass filaments colored in black of a thickness of 3.7 mm manufactured by Ube Nitto Kasei, Japan, under a trade name of AZDEL P1038.

The molded article thus manufactured was found to have a lot of freeze mark all over the surfaces as was on the surface B in Example 5.

Example 7

The procedure set forth in Comparative Example 5 was followed except for the use in the flow molding process of a sheet of medical gauze colored in black over both the surfaces of the sheet preheated.

The molded article thus manufactured had good appearance in that no freeze mark was observed at all.

Comparative Example 6

The procedure set forth in Comparative Example 4 was followed except for the use of the dried web prepared in Comparative Example 3.

The molded articles thus manufactured had far poorer appearance than that of the surface B in Example 5.

Example 8

The procedure set forth in Comparative Example 6 except for the use just ahead of the mold closure of a sheet of medical gauze colored in black over the surface to make the surface A of the web preheated.

The molded article thus manufactured had very good appearance at the surface A as in Example 5. The appearance of the surface B was poor as that of the surface B in Comparative Example 6.

Example 9

The composite sheet having a sheet of medical gauze embedded on one of the surfaces prepared in Example 1 was cut into a test sample of 17 cm x 12.5 cm and, after being preheated for 4 minutes by the same IR heater used in Comparative Example 4, was subjected to molding process wherein the 70 ton hydraulic press referred to hereinbefore was used and a test mold for the stamping molding thereby to manufacture a molded article shown in FIG. 2 having a surface D which was convex, a surface E which was concave and a surface D on which the gauze was embedded. The pressure applied was 100 kg/cm$^2$ and water at 70° was fed through the mold.

The molded article thus manufactured had good surface at the surface D as that at the flat surface A in Example 4. The surface E was poor as that at the surface B in Example 4.

The molded article manufactured had, as shown in FIG. 1, three types of a recess 3 of a depth of 20, 12 and 8 mm each.

## Claims

1. In a process for manufacturing molded articles of a fiber-reinforced thermoplastic resin wherein a sheet preform made of a composite material comprising a composite material comprising fiber reinforcement and a thermoplastic resin is molded under heat and pressure into a molded article of a fiber-reinforced thermoplastic resin, the improvement which comprises subjecting the preform to the molding process in the presence, near its surface and covering at least a part of its surface, of netting of openings of no larger than 3 mm, thereby to form a molded article having the netting embedded on its surface.

2. The process for manufacturing molded articles of a fiber-reinforced thermoplastic resin as claimed in claim 1 wherein the thermoplastic resin is a crystalline resin.

3. The process as claimed in claim 2 wherein the crystalline resin is polypropylene.

4. The process as claimed in claim 2 wherein the crystalline resin is a polyamide.

5. The process as claimed in claim 1 wherein the fiber reinforcement is glass fiber.

6. The process as claimed in claim 1 wherein the preform is prepared by admixing the fiber reinforcement and the thermoplastic resin in a particulate form in air.

7. The process as claimed in claim 1 wherein the preform is prepared by admixing the glass reinforcement and the thermoplastic resin in a particulate form in water.

8. The process as claimed in claim 6 or 7 wherein the thermoplastic resin is in the form of powder of particle size of 1 mm or smaller.

9. The process as claimed in claim 6 or 7 wherein the fiber reinforcement is discrete fiber of a length of 3 to 50 mm and of a diameter of 3 to 25 μm.

10. The process as claimed in claim 6 or 7 wherein the fiber reinforcement and the thermoplastic resin is admixed in a proportion of 50 to 90% by weight of the thermoplastic resin and 50 to 10% by weight of the fiber reinforcement.

11. The process as claimed in claim 1 wherein the netting is of openings of 0.1 to 1 mm.

12. The process as claimed in claim 1 wherein the netting is a knitted fabric.

13. The process as claimed in claim 1 wherein the preform is in the form of a mat, the netting is applied over the preform and heat and pressure are applied thereon to prepare an intermediate sheet having the netting thereon, and the sheet thus prepared is then subjected to the molding process under heat and pressure into the molded article having the netting embedded on its surface.

14. The process as claimed in claim 13 wherein the intermediate sheet has a basis weight of 500 to 5000 g/m$^2$.

15. The process as claimed in claim 1 wherein the preform is in the form of a mat, the netting is applied over the preform, and the sheet thus prepared is subjected to the molding process under heat and pressure into the molded article having the netting embedded in its surface.

16. The process as claimed in claim 1 wherein the pressure applied in the molding process is at least 3 kg/cm$^2$.

17. The process as claimed in claim 1 wherein the pressure applied in the molding process is at least 10 kg/cm$^2$.

18. The process as claimed in claim 1 wherein the netting has a thickness of 40 to 600 μm.

F I G . I

F I G . 2

**European Patent Office**

# EUROPEAN SEARCH REPORT

Application Number

EP 91 30 2150
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 093 284 (ALLIED CORP.)<br><br>* page 1, line 17 – page 1, line 20 *<br>* page 2, line 20 – page 2, line 24 *<br>* page 4, line 12 – page 4, line 25 *<br>* page 5, line 1 – page 5, line 2 *<br>* page 6, line 3 – page 6, line 19 *<br>* page 7, line 12 – page 7, line 23 *<br>* page 8, line 16 *<br>* page 12, line 22 – page 12, line 33 *<br>--- | 1-5,12, 13 | B29C67/14<br>B32B31/12 |
| X | FR-A-2 083 561 (UNION CARBIDE)<br><br>* page 4, line 18 – page 4, line 21 *<br>* page 5, line 14 – page 5, line 20 *<br>* page 6, line 14 – page 6, line 22 *<br>* page 7, line 28 – page 7, line 34 *<br>* page 12, line 27 – page 12, line 37 *<br>* page 13, line 32 – page 13, line 35 *<br>* page 14, line 37 – page 15, line 1 *<br>* page 17, line 13 – page 17, line 23 *<br>* page 18, line 15 – page 18, line 27 *<br>* page 21, line 11 – page 21, line 12; claim 2; figures 1-4 *<br>--- | 1-7, 11-13, 16,17 | |
| | | | **TECHNICAL FIELDS SEARCHED (Int. Cl.5)**<br><br>B32B<br>B29C |
| Y | EP-A-0 289 860 (DOW CHEMICAL)<br>* column 1, line 31 – column 1, line 40 *<br>* column 2, line 16 – column 2, line 46 *<br>* column 3, line 25 – column 3, line 41 *<br>* column 8, line 35 – column 8, line 55 *<br>--- | 1,13,15 | |
| P,Y | PATENT ABSTRACTS OF JAPAN<br>vol. 14, no. 181 (M-961)(4124) April 11, 1990<br>& JP-A-20 32 842 (ASAHI GLASS ) February 2, 1990 | 1,13,15 | |
| Y | * the whole document *<br>--- | 1,13,15 | |
| | -/-- | | |

The present search report has been drawn up for all claims

| Place of search | Date of completion of the search | Examiner |
|---|---|---|
| THE HAGUE | 20 JUNE 1991 | PHILPOTT G.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 259 676 (GENERAL ELECTRIC COMPANY)<br><br>* page 2, line 13 - page 2, line 18 *<br>* page 3, line 14 - page 3, line 18; claims 6,7,13,17,21,22 *<br><br>--- | 1,4,9,<br>13,14 | |
| A | US-A-4 238 266 (A. H. STEINBERG ET AL)<br><br>* column 1, line 34 - column 1, line 44 *<br>* column 2, line 31 - column 2, line 37 *<br>* column 3, line 33 - column 3, line 47 *<br>* column 4, line 15 - column 4, line 57 *<br>* column 7, line 1 - column 7, line 19 *<br>* column 7, line 62 - column 8, line 9; figure 1 *<br><br>--- | 1,2,3,6,<br>8-10,13 | |
| A | EP-A-0 305 207 (GATES FORMED-FIBRE PRODUCTS INC)<br>* column 5, line 45 - column 5, line 58 *<br>* column 6, line 6 - column 6, line 24 *<br><br>--- | 1,15 | |
| A | GB-A-1 375 274 (JOHNS-MANVILLE CORPORATION)<br>* page 1, line 90 - page 1, line 38 *<br>* page 2, line 90 - page 2, line 96 *<br>* page 3, line 24 - page 3, line 29 *<br>* page 4, line 3 - page 4, line 13; figures 1,2 *<br><br>--- | 1 | TECHNICAL FIELDS SEARCHED (Int. Cl.5) |
| A | US-A-3 850 723 (R. H. ACKLEY)<br><br>* the whole document *<br>--- | 1,5,7,9,<br>12,13,<br>14,16-18 | |
| A | EP-A-0 251 217 (VORWERK & CO. INTERHOLDING)<br>* the whole document *<br><br>----- | | |

The present search report has been drawn up for all claims

| Place of search | Date of completion of the search | Examiner |
|---|---|---|
| THE HAGUE | 20 JUNE 1991 | PHILPOTT G. R. |